# EUROPEAN PATENT APPLICATION

(11) **EP 2 571 335 A2**
(43) Date of publication of application: **20.03.2013**
(21) Application number: 12006397.9
(22) Date of filing: 12.09.2012
(51) Int. Cl.: H05B 37/02, G08C 19/00

(54) **Motion detector**

(30) Priority: 15.09.2011 ES 201100857
(71) Applicant: Ingenium, Ingenieria Y Domotica S.L., Parque Tecnologico de, 33428 Llanera Asturias (ES)
(72) Inventor: Coto Pazos, Pedro, CP 33428 Llanera - Asturias (ES)
(74) Representative: Pereira Toña, Maria Irache

(57) **Abstract**

The invention comprises a Radio Frequency (RF) motion detector that once installed goes unnoticed, reinforcing its functionality as a security element. This motion detector features several stages, such as the Radio Frequency detection one, the filtering and conditioning ones (2-2'), the amplification one, prior to the digital signal processing (4) by means of a digital signal microcontroller/processor as well as the analog/digital conversion one (6-6') and the access for the communications by means of a KNX bus. A firmware (7) is fitted in the device for the analysis of the received Radio Frequency signals and the communication ones with other devices via the communication access (5) through a KNX bus.

Therefore, whenever the device detects any kind of motion sends a signal in the form of a telegram addressed to a recipient in the KNX Group.

## Description

### OBJECT OF THE INVENTION

The present invention relates to a radiofrequency motion detector which is installed so as to pass unnoticed, enhancing their functionality as a security element.

The object of the invention is to provide a device capable of detecting movement within a predefined magnitude and range with configurable parameters, capable of sending a telegram signal addressed to a KNX group address through different media, whether wired or wireless.

The invention is in the field of safety devices.

### BACKGROUND OF THE INVENTION

**Presence sensors PIR type**: they are sensors that detect movement and changes in temperature.

PIR detectors react only to certain energy sources such as the human body. These capture the presence by detecting the difference between the heat emitted by the human body and the surrounding space.

The main disadvantages are that they cannot be hidden, and depending on environments may not be effective, for example with air currents or temperature conditions that mask the object to be detected.

**Ultrasonic presence detectors:** ultrasonic based sensors emit ultrasonic waves into the area to control, which bounce off objects and return to the present detector receiver.

The main advantage of this type of detector is that it is not necessary that it is visible for proper operation, since the ultrasonic waves are able to pass through some materials, such as those commonly used in the construction of walls and ceilings (plasterboard). Due to this the detector requires no particular aesthetic finishing, and is much more difficult to access if someone intends to manipulate it.

Previously Ingenium already had in its range of products, a radio frequency detector called SR, unable to communicate digitally with any data network, and another one called SRBUS which only support the protocol BUSing, being impossible the communication under another home automation connectivity standard, widespread in Europe, as KNX.

### DESCRIPTION OF THE INVENTION

This motion detector is designed to solve the problems outlined above For this purpose in the device of the invention defines a first radiofrequency sub-circuit detection then establishing a sub-circuit of amplification and filtering, and later, through the corresponding microprocessor to perform digital processing and access to the KNX bus, ie the data bus according to European standard.

More specifically, in the radiofrequency detection sub-circuit the said circuit return-signal is received determining whether or not motion detection.

The captured signal, is conditioned for further processing, so that is passed through a filter in order to remove frequencies not useful for detection, using a bandpass filter.

After cleaning the signal, it is amplified, to adapt a manageable level A / D converter of the microcontroller of the device.

In this converter, the signal is digitized obtaining the same by appropriate sampling period, which permits to supply the necessary information to determine when movement has occurred.

Thus, from the control of the microcontroller firmware, if the detection has been positive, a telegram to the KNX bus is sent, through different possible ways that this technology enables, such as twisted pair (TP), TCP net (IP), data on power line (PL) or radiofrequency (RF), informing other devices on that event.

Therefore, under terms outlined above, depending on the microcontroller or DSP (digital signal processor) employed, the signal filtering and processing can perform from different configurations and circuits.

In this regard, it should be noted the following optional configurations:
- By analog filtering, analog amplification and conventional analog-digital conversion.
- By analog filtering and analog-digital high resolution conversion.
- Using analog amplification, conventional digital-analog conversion and digital filtering.
- By high-resolution analog-digital conversion and digital filtering and processing.

As for the firmware of the microcontroller, are defined in it two main functions: the detection algorithm and the ways of communication with the KNX bus.

The detection algorithm is responsible for determining, based on the received signal, if there is or not a motion detection, for if so, send the appropriate message to the KNX.

For its part, the communications firmware performs all necessary tasks and processing, both for sending and receiving data from the KNX bus, being in charge to allow programming from the official software KNX (ETS) that allows the configuration of its parameters and recipients of sending made when detection occurs.

### DESCRIPTION OF THE DRAWINGS

To complement the description that is going to be performed, and in order to aid a better understanding of the invention's characteristics, according to a preferred practical embodiment example, is attached as an integral part of said description a set of drawings wherein by way of illustration and not restrictively, the following has been represented:
- Figure 1. - Shows a block diagram of the various sub-circuits making up the device of the invention.
- Figure 2. - Shows a block diagram corresponding to the device of the invention obtained by analog filtering, analog amplification, and conventional digital-analog conversion.
- Figure 3. - Shows a second realization variant, specifically a block diagram corresponding to the device of the invention obtained by analog filtering and high resolution analog-digital conversion.
- Figure 4. - Shows a third realization variant, specifically a block diagram corresponding to the device of the invention obtained by analog amplifier, conventional analog-digital conversion and digital filtering.
- Figure 5. - Finally shows a fourth realization variant, specifically a block diagram corresponding to the device of the invention obtained by high resolution analog-digital conversion, and filtering and digital processing.

### PREFERRED REALIZATION OF THE INVENTION

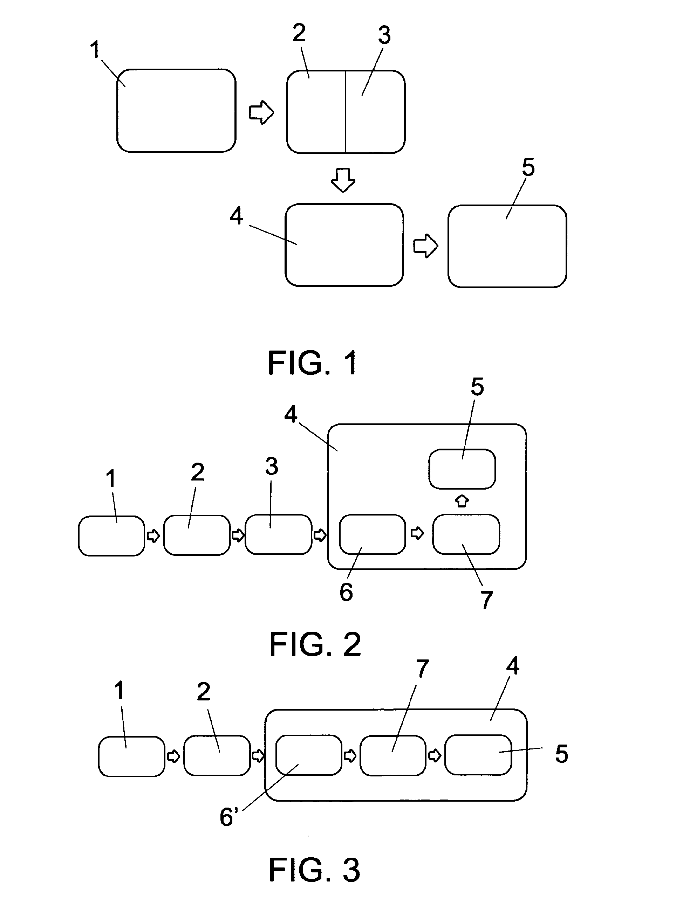

As seen in Figure 1, in the movement detecting device of the invention, a sub-circuit (1) for detection by radiofrequency is defined, in which after sending a radio frequency signal, the returned signal is detected by the device.

After this sub-circuit, imposing a filter sub-circuit (2) for signal conditioning, to which connecting an amplification sub-circuit (3), prior to digital signal processing by a microcontroller (4) or a digital signal processor (DSP).

For this processing, an analog/digital converter (6) must be used, so that through the programming firmware (7) can be determined as a function of the received signal if there is movement, as well as communicate with the KNX bus, settling for this an access (5) to that bus.

Due to the many possibilities offered by the market, there are provided four possible specific realizations for the device described above, so that, in a first realization shown in Figure 2, using an analog filter (2), an analogue amplifier (3) and a conventional analog-digital converter (6).

In a second variant, shown in the Figure 3, also uses an analog filter (2), but with the peculiarity that a high resolution analog-digital converter (6') is used, so that the amplification step is no accurate.

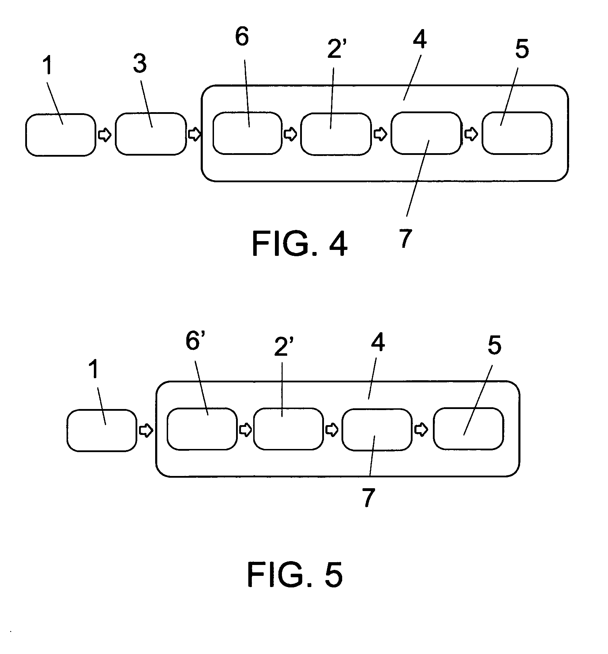

In a third variant, shown in Figure 4, in the first instance the analogue amplification by an analog amplifier (3) is performed, where the microprocessor itself is directly responsible for the process of digitally filtering through a digital filter (2'), upon analog-digital conversion using a digital analog converter (6).

Finally, and in accordance with a fourth alternative realization shown in Figure 5, the microcontroller may directly receive the signal at its high resolution analog-digital converter (6'), proceeding to the digitally filtered through a digital filter (2'), via the firmware to (7).

Regarding the access (5) to the NNX bus, this standard has various ways by which transmit telegrams. Each of these way requires a specific step, with the possibility to choose from the following materializations.
- TP (twisted pair)
- RF (Radio Frequency)
- IP (TCP net)
- PL (power line data)

Thus and as discussed above, through this bus can communicate with other devices as well as programming the device of the invention itself.

## Claims

1. ^{st} - Motion detector, **characterized by** the fact that it defines a radiofrequency detection sub-circuit (1), a filtering sub-circuit (2-2') of the signal conditioner, an amplifier (3), upon the signal digital processor via a microcontroller (4) or a signal digital processor (DSP), an analog/digital converter (6-6'), and an access (5) of communication with KNX bus, having expected the device to be complemented with a programming firmware (7) of the analysis of the received radiofrequency signals as well as communication with other devices through communication access (5) with KNX bus.

2. ^{nd}. - Motion detector according to 1^{st} claim, **characterized by** the fact that the filtering sub-circuit (2) and amplifier (3) are realized in analog devices, while the sub-circuits of analog-digital conversion (6) are implemented through the microcontroller.

3. ^{rd} - Motion detector according to 1^{st} claim, **characterized by** the fact that the filtering sub-circuit (2) is materialized in an analog filtering circuit, including an high resolution analog-digital converter (6') as replacement of the step of amplification (3) and digital-analog conversion (6).

4. th. - Motion detector according to 1^{st} claim, **characterized by** the fact that the amplification sub-circuit (3) is analog, while the sub-filtering sub-circuit is embodied in a digital filter (2 ') implemented by the microcontroller itself.

5. th. - Motion detector according to 1^{st} claim, **characterized by** the fact that the microcontroller (4) receives the signal directly in its high resolution digital-analog converter (6 '), including a digital filtering firmware.

6. th. - Motion detector, according to 1^{st} claim, **characterized by** the fact that the access (5) to the NNX bus, is conducted through TP (twisted pair), RF (Radio Frequency), IP (TCP net) or PL (Power Line Data).
